# EUROPEAN PATENT SPECIFICATION

(11) **EP 0 621 150 B1**
(45) Date of publication and mention of the grant of the patent: **18.06.1997**
(21) Application number: 94200996.0
(22) Date of filing: 13.04.1994
(51) Int. Cl.: B60J 5/04

(54) **Door beam and car door having such a door beam as a crash bar**
Türträger und Tür mit solchem Träger als Rammschutz
Poutre pour porte et porte de voiture pourvue d'une telle porte comme poutre de choc

(30) Priority: 23.04.1993 NL 9300697
(43) Date of publication of application: 26.10.1994
(73) Proprietor: Hoogovens Staal B.V., NL-1970 CA IJmuiden (NL)
(72) Inventor: Kragtwijk, Simon Petrus, NL-1015 GN Amsterdam (NL); Rieck, Frank Gerard, NL-2343 GX Oegstgeest (NL); van Schaik, Mercellinus Antonius Maria, NL-1991 ND Velserbroek (NL)
(74) Representative: Van Breda, Jacobus, Mr. Ir.

(56) References cited:
- EP-A- 0 235 091
- WO-A-93/04886
- GB-A- 1 124 656

## Description

The invention relates to a door beam for use in a door of a car as a crash bar. The door beam is obtained by extrusion of a light metal and comprises two walls which respectively face inwardly and outwardly in the car door and two side walls connecting them together to form a box shape in cross-section.

Such a door beam as well as its use is described in the journal ALUMINIUM 65 (1989), no. 9, pages 4-7 and in EP-A-235091 and EP-A-0284566. Suitable extrudable light metal alloys, such as aluminium alloys, are well known.

Door beams for use in cars in the form of a steel tube have been known for some time. These door beams serve for installation in the door or doors of a car for protection in the event of side collisions. A problem with the known steel door beam is that it is rather heavy. To this end an alternative is being sought in light metal. A light metal section manufactured by extrusion is sought with which a stable deformation may be obtained under loading. The risk with an inadequately stable deformation of the door beam is that the resistance capacity may reduce abruptly so that a dangerous situation arises for the occupants of the car on account of the sudden elimination of protection.

With the known door beam of the kind just described made in light metal such a situation can arise because of collapse of the side walls which connect the walls of the door beam together. This is manifested in an uncontrolled and unstable manner of collapse of the door beam.

In accordance with EP-A-235091 this problem of unstable collapse is countered by using thickenings at the extremities of the walls of the door beam. It is also shown in EP-A-235091 and DE-A-3621697 to insert a reinforcing element into the box shape, touching the inner and outer walls. For example a tube is illustrated in EP-A-235091. A door beam according to the preamble of claim 1 is known from WO-A-9304886.

The object of the present invention is now further to counter the problem of unstable collapse as described above and to create a door beam which is simple in manufacture and light in weight.

The door beam in accordance with the invention is according to the definition of claim 1.

With the door beam in accordance with the invention the angle which each connecting member forms with each of the first and second walls is at least 35° and at most 70°. In a most preferred form of the invention this angle is set at approximately 50°. This solution provides a good compromise between on the one hand resistance against unstable collapse and on the other hand weight saving through limiting the length of the connecting pieces used. The or each connecting member is preferably a generally planar web, and is preferably extruded together with the first and second walls.

The door beam in accordance with the invention is suitable to be manufactured by extrusion, since it has been found that it is sufficient to use side walls and connecting member(s) whose thickness may be set to at least the value which is needed for allowing the extrusion process to run successfully. It is possible to omit the thickenings used in accordance with the prior art at the extremities of the walls of the door beam. In the case of manufacture by means of extrusion of the door beam in accordance with the invention it has become possible for the section of the door beam in cross-section to be optimised coherently with respect to moment of resistance, stability under deformation and weight of the door beam. While retaining the other technical properties and when using a conventional grade of aluminium, or aluminium alloy, the completed door beam in accordance with the invention has been found to display a weight saving compared with the known door beam of approximately 6-10%, or, alternatively, while achieving the same technical properties including the weight of the door beam, it is possible to use a lower grade of aluminium than in accordance with the known state of the art.

Preferably at the apex of each acute angle between each connecting member and the first and second walls, there is a rounded fillet. This also contributes to the resistance against unstable collapse. Moreover this provides the advantage of less wear on the extrusion die by which the door beam is manufactured.

Further it is also preferred to extend the extremities of the first and second walls as projecting flanges, beyond the side walls.

It is preferable for the door beam to be provided with at least two connecting members which extend diverging relative to one another across the box shape of the beam, so that their respective ends are closer on the second wall than on the first wall. The advantage of this becomes evident in the application of the door beam. It is then desirable to install the door beam in the car door in such a way that the first wall of the door beam faces the inside of the car door. This manner of installation contributes to the improvement of resistance against unstable collapse.

The invention also provides a door for a car provided with a door beam according to the invention, particularly as just described.

The invention will now be illustrated by reference to the drawing which shows a single figure.

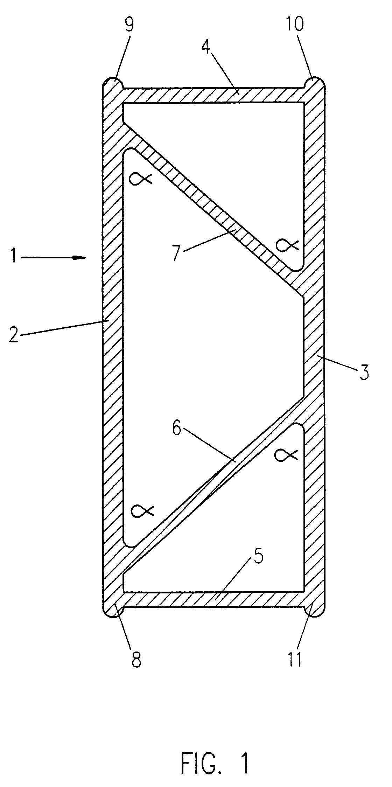

Fig. 1 shows a door beam in accordance with the invention in cross-section.

The door beam is not shown in its installed state in a car door. This is generally available and known technology and is shown for example in the publications cited above.

Fig. 1 shows the door beam 1 which is a single-piece extrusion in suitable light metal such as a conventional aluminium alloy, extruded in the direction perpendicular to the plane of Fig. 1. Suitable extrusion technology is known. The beam 1 has a first, inside a wall 2 and a second, outside wall 3. Walls 2 and 3 are connected together by means of side walls 4 and 5 to form a rectangular box-shape cross-section. Furthermore walls 2 and 3 are connected together by two obliquely extending connecting members 6 and 7 in the form of generally planar webs integrally extruded with the wall 2,3,4,5. Connecting members 6 and 7 form an angle α of at least 35° and at most 70° to the respective walls 2 and 3. The Figure shows the preferred embodiment in which this angle α is set at 50°. This allows the length of the connecting pieces 6 and 7 to remain reasonably short so that addition of weight to the door beam 1 is reasonably small. At the acute angles α, the connections of the walls 2,3 and members 6,7 are rounded off by concave fillets, which provides a further improvement in the resistance against unstable collapse. As shown, it is also possible to provide projections 8,9,10,11 as the extremities of the walls 2 and 3 beyond the side walls 4 and 5, which further enhances the resistance against collapse.

Figure 1 shows the embodiment of the door beam 1 which has the two connecting members 6,7 which are each connected by one end to the second wall 3 and extend at an angle to that wall 3 diverging relative to one another in the direction of the first wall 2 and are connected by their other ends to the first wall 2. When the door beam is installed in a door of a car, it should preferably be installed so that this first wall 2 faces the inside of the car door.

As Fig. 1 shows, the side walls 4,5 and connecting members 6,7 are thinner than the first and second walls 2,3, and are of approximately the same thickness.

## Claims

1. Door beam for use in a car door, obtained by extrusion in light metal and having spaced first and second walls (2,3) which in a door are respectively facing inwardly and outwardly, and side walls (4,5) connecting the first and second walls to form a box shape in cross-section, said door beam further having at least one reinforcing element (6,7) inside the box shape, the or each said reinforcing element (6,7) is a connecting member (6,7) joined at its ends respectively to said first and second walls (2,3) and extending across said box shape obliquely to said first and second walls (2,3), characterised in that the or each said connecting member (6,7) is at an angle in the range 35 to 70° to each of said first and second walls (2,3).

2. Door beam according to claim 1 wherein the or each said connecting member (6,7) is a generally planar web.

3. Door beam according to claim 1 or claim 2 wherein the or each said connecting member (6,7) is integrally extruded with said first and second walls (2,3).

4. Door beam according to claim 1 wherein said angle is about 50°.

5. Door beam according to any one of claims 1 to 4 wherein at the apex of each acute angle between the or each said connecting member (6,7) and each of said first and second walls (2,3) there is a rounded fillet.

6. Door beam according to any one of claims 1 to 5 wherein said first and second walls (2,3) extend beyond said side walls (4,5) to provide projecting flanges (8,9,10,11).

7. Door beam according to any one of claims 1 to 6 having two said connecting members (6,7) which extend diverging from each other across the box shape, so that their respective ends are closer together on said second wall (3) than on said first wall (2).

8. Car door having at least one door beam according to any one of the preceding claims as a crash bar.

9. Car door having at least one door beam according to claim 7 as a crash bar, with said first wall (2) facing towards the inside of the door.

## Patentansprüche

1. Türträger zur Verwendung in einer Wagentür, der durch Strangpressen eines Leichtmetalls erhalten wird und beabstandete erste und zweite Wände (2, 3), die in einer Tür jeweils nach innen und nach außen weisen, und Seitenwände (4, 5), die die ersten und zweiten Wände miteinander verbinden, um eine Kastenform im Querschnitt zu bilden, aufweist, wobei der Türträger weiterhin wenigstens ein Verstärkungselement (6, 7) innerhalb der Kastenform hat und das oder jedes Verstärkungselement (6, 7) ein Verbindungselemente (6, 7) ist, das an seinen Enden jeweils mit den ersten und zweiten Wänden (2, 3) verbunden ist und sich quer zur Kastenform schräg zu den ersten und zweiten Wänden (2, 3) erstreckt, dadurch gekennzeichnet, daß das oder jedes Verbindungselement (6, 7) unter einem Winkel im Bereich von 35 bis 70̸° zu jeder der ersten und zweiten Wände (2, 3) liegt.

2. Türträger nach Anspruch 1,
worin das oder jedes Verbindungselement (6, 7) ein allgemein planarer Steg ist.

3. Türträger nach Anspruch 1 oder Anspruch 2,
worin das oder jedes Verbindungselement (6, 7) einstückig mit den ersten und zweiten Wänden (2, 3) stranggepreßt ist.

4. Türträger nach Anspruch 1,
worin der Winkel etwa 50̸° ist.

5. Türträger nach einem der Ansprüche 1 bis 4,
worin an der Spitze von jedem spitzen Winkel zwischen dem oder jedem Verbindungselement (6, 7) und jeder der ersten und zweiten Wände (2, 3) eine abgerundete Ausbauchung vorgesehen ist.

6. Türträger nach einem der Ansprüche 1 bis 5,
worin die ersten und zweiten Wände (2, 3) sich über die Seitenwände (4, 5) hinauserstrecken, um vorstehende Flansche (8, 9, 10̸, 11) zu bilden.

7. Türträger nach einem der Ansprüche 1 bis 6, mit zwei Verbindungselementen (6, 7), die sich divergierend voneinander quer zur Kastenform erstrecken, so daß ihre entsprechenden Enden an der zweiten Wand (3) näher als an der ersten Wand (2) zueinander liegen.

8. Wagentür mit wenigstens einem Türträger nach einem der vorhergehenden Ansprüche als ein Aufprallschutz.

9. Fahrzeugtür mit wenigstens einem Türträger nach Anspruch 7 als ein Aufprallschutz, wobei die erste Wand (2) in Richtung der Innenseite der Tür weist.

## Revendications

1. Poutre pour porte de véhicule, obtenue par extrusion d'un métal léger et comportant des première et seconde parois (2,3) qui, dans une porte, se trouvent respectivement orientées vers l'intérieur et l'extérieur, et des parois latérales (4, 5) raccordant les première et seconde parois de manière à présenter en coupe transversale la forme d'un caisson, ladite poutre pour porte comportant en outre, au moins un élément de renforcement (6, 7) à l'intérieur de la forme en caisson, l'élément ou chaque élément de renforcement (6, 7) étant un élément de raccordement (6,7) relié à ses extrémités respectivement auxdites première et seconde parois (2, 3) et s'étendant en travers de ladite forme en caisson obliquement par rapport auxdites première et seconde parois, caractérisé en ce que l'élément ou chaque élément de raccordement précité (6, 7) fait un angle compris entre 35° et 70° avec chacune desdites première et seconde parois (2,3).

2. Poutre pour porte selon la revendication 1, dans laquelle l'élément ou chaque élément de raccordement précité (6, 7) est une âme globalement plane.

3. Poutre pour porte selon la revendication 1 ou la revendication 2, dans laquelle l'élément ou chaque élément de raccordement (6, 7) est venu d'extrusion avec lesdites première et seconde parois (2, 3).

4. Poutre pour porte selon la revendication 1, dans laquelle ledit angle est d'environ 50°.

5. Poutre pour porte selon l'une quelconque des revendications 1 à 4, dans laquelle au sommet de chaque angle aigu entre l'élément ou chaque élément de raccordement précité (6, 7) et chacune desdites première et seconde parois (2, 3) se trouve un congé arrondi.

6. Poutre pour porte selon l'une quelconque des revendications 1 à 5, dans laquelle lesdites première et seconde parois (2, 3) s'étendent au-delà desdites parois latérales (4, 5) de manière à former des rebords saillants (8, 9, 10, 11).

7. Poutre pour porte selon l'une quelconque des revendications 1 à 6, comportant deux éléments de raccordement (6, 7) qui s'étendent en divergeant l'un de l'autre en travers de la forme en caisson, de sorte que leurs extrémités respectives se trouvent plus rapprochées l'une de l'autre sur ladite seconde paroi (3) que sur ladite première paroi (2).

8. Porte de véhicule comportant au moins une poutre selon l'une quelconque des revendications précédentes en tant que barre de renfort en cas de collision.

9. Porte de véhicule comportant au moins une poutre selon la revendication 7 en tant que barre de renfort en cas de collision, ladite première paroi (2) étant orientée vers l'intérieur de la porte.
